(19) **Europäisches Patentamt / European Patent Office / Office européen des brevets**

(11) **EP 2 127 748 B1**

(12) **FASCICULE DE BREVET EUROPEEN**

(45) Date de publication et mention
de la délivrance du brevet:
**16.10.2013 Bulletin 2013/42**

(51) Int Cl.:
**B01L 3/00** *(2006.01)*    **G01N 15/02** *(2006.01)*

(21) Numéro de dépôt: **09290348.3**

(22) Date de dépôt: **12.05.2009**

(54) **Procédé de tri de particules ou d'amas de particules dans un fluide circulant dans un canal**

Aussortierverfahren von Partikeln oder Partikelklumpen in einer Flüssigkeit, die in einem Kanal fließt

Method for sorting particles or clusters of particles in a fluid circulating in a channel

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.05.2008 FR 0802577**

(43) Date de publication de la demande:
**02.12.2009 Bulletin 2009/49**

(73) Titulaire: **Commissariat à l'Énergie Atomique et aux Énergies Alternatives**
**75015 Paris (FR)**

(72) Inventeurs:
• **Le Vot, Sophie**
  **38800 Le Pont de Claix (FR)**
• **Berthier, Jean**
  **38240 Meylan (FR)**
• **Rivera, Florence**
  **38240 Meylan (FR)**

(74) Mandataire: **Bolinches, Michel Jean-Marie et al**
**Cabinet Orès**
**36, rue de St Pétersbourg**
**75008 Paris (FR)**

(56) Documents cités:
WO-A-03/006133        US-A1- 2003 198 523
US-A1- 2004 072 278    US-A1- 2006 035 386
US-A1- 2007 039 463    US-B1- 6 506 609

• **DANEIL T. CHIIU: ANALYTICAL AND BIOANALYTICAL CHEMISTRY, vol. 387, 28 juillet 2006 (2006-07-28), pages 17-20, XP002509764**
• **J.P. SHELBY, D.T. CHIU: LABCHIP, vol. 4, 21 avril 2004 (2004-04-21), pages 168-170, XP002509765**

**EP 2 127 748 B1**

**Description**

La présente invention a pour objet un procédé de tri et éventuellement de concentration de particules submillimétriques ou d'amas de particules submillimétriques dans un fluide circulant dans un canal principal.

On connaît déjà des procédés de tri hydrodynamique passif à l'aval d'un réseau périodique d'obstacles qui dévient dans une même direction à chaque rangée de plots les particules plus grandes qu'une taille critique déterminée par la géométrie du dispositif. La trajectoire des plus grosses particules étant ainsi inclinée par rapport à celle des plus petites, il est possible de séparer des cellules selon leur taille.

Une telle technique est décrite notamment dans les Demandes WO 2004/037374 (HUANG), US 2007-026381 (HUANG) ou bien encore US 2007-059781 (KAPUR).

Un autre procédé de tri passif met en oeuvre deux flux laminaires, à savoir un tampon contenant des particules et un tampon de focalisation sans particules qui sont poussés dans un canal étroit avant de pénétrer dans un canal plus large.

Selon ce procédé, la focalisation permet de positionner les particules contre la paroi opposée au canal. Cette focalisation est réalisée par l'injection latérale d'un fluide sans particule et favorisée par la restriction géométrique. Elle permet d'induire une différence de position par rapport à la paroi entre les particules en fonction de leur taille, l'élargissement de la section permettant un tri. Ainsi les plus petites particules, auront leur centre d'inertie à une distance x1 ( très petite) proche de la paroi du canal sur laquelle s'effectue la focalisation, et les plus grandes particules auront leur centre d'inertie à une distance x2 supérieure à x1.

Lors du passage de la région de pincement à la région de section élargie, la différence de positionnement des lignes d'écoulement est accentuée, et comme les particules suivent les lignes d'écoulement sur lesquelles leur centre d'inertie est positionné, l'élargissement du canal accentue la différence de position entre petites et grosses particules.

Le pincement de flux présente l'inconvénient d'exercer des contraintes de cisaillement sur les particules lorsqu'elles atteignent le canal étroit, et surtout oblige, de par sa géométrie, à une dilution des échantillons de particules à laquelle la technique utilisée ne permet pas de remédier. Une telle technique est décrite notamment dans le document "Pinched Flow Fractionation : Continuous Size Separation of Particules Utilizing a Laminar Flow Profile in a Pinched Microchannel" de Masumi YAMADA et Collaborateurs (Analytical Chemistry, vol. 78, n° 18, 15 Septembre 2004, pages 5465 à 5471).

Une autre technique connue est un procédé de tri actif par lequel les lignes d'écoulement d'un fluide contenant des particules sont déviées en créant localement une zone de basse pression par aspiration. La trajectoire des particules dépend du bilan global des forces appliquées sur les particules : en fonction de leur masse, densité, volume (ou diamètre), vitesse et du champ de pression résultant de l'aspiration les particules seront triées ou pas. Une telle technique est proposée dans la Demande US 2007/221550 (WO 2006/102258) de Barton SMITH et Zachary HUMES.

Encore une autre technique connue est la filtration hydrodynamique qui est décrite en particulier dans l'article de Masumi YAMADA et Minori SEKI "Hydrodynamic filtration for on-chip particle concentration and classification utilizing microfluidics". The Royal Society of Chemistry, 2005, Lab Chip 2005, 5, pages 1233 à 1239. Ce procédé met en oeuvre des écoulements de faible débit dans des canaux latéraux, d'une part, pour concentrer et aligner les particules, et d'autre part, pour les sélectionner. La concentration des particules le long des parois nécessite un grand nombre de canaux latéraux avec un faible débit d'écoulement et un dimensionnement géométrique très précis.

Il est également connu d'utiliser des micro-tourbillons pour piéger des petites particules fluorescentes (dont la taille est de l'ordre du micromètre). Cette technique est décrite par D. LIM et Collaborateurs dans "Dynamic formation of ring-shape patterns of colloïdal particles in microfluidic systems", Applied Physics Letters 2003, 83 (6), pages 1145 à 1147. Ce procédé nécessite des gammes de vitesse élevées.

Un procédé de séparation de particules selon leur densité par recirculation centrifuge a été décrit par SHELBY et collaborateurs dans « High radial acceleration in microvortices» paru dans Nature 2003, 425, pages 38 et suivantes, pour séparer deux types de billes de densités différentes (billes de polystyrène de densité 1,05 g/cm3 et billes de silice de densité 1,8 à 2 g/cm$^3$). La recirculation centrifuge permet de concentrer les billes de faible densité au centre du vortex et celles de densité plus élevée vers les parois de la chambre. Ce procédé nécessite des vitesses élevées (de l'ordre de 20m/s), ainsi qu'une différence de densité importante entre les particules. Enfin il ne permet pas de récupérer les particules séparées.

Ce procédé n'a donc pas pour but de trier ou de concentrer des particules, mais plutôt de séparer des particules en appliquant une force centrifuge  élevée (accélération centrifuge de l'ordre de $10^4$ m/s$^2$) avec un cisaillement élevé (de l'ordre de $10^5$ Pa) dans des zones de recirculation.

La présente invention a pour objet un procédé de tri de prélèvement, et éventuellement de concentration de particules ou d'amas de particules selon leur taille sans imposer comme condition obligatoire de diluer la solution, ni de mettre en oeuvre une force centrifuge et/ou un cisaillement élevés.

Le procédé de tri de particules submillimétriques **selon l'invention est défini dans la revendication 1.**

Le procédé permet ainsi de trier les particules en combinant une focalisation des particules, et un dispositif de tri et de prélèvement, l'entrée d'une particule dans un dispositif de tri et de prélèvement étant conditionnée par ses caractéristiques géométriques. En outre, le dispositif de tri et de prélèvement étant une chambre de recirculation contenant une zone de recirculation, le procédé permet une concentration des particules triées avant leur prélèvement.

Avantageusement, ladite chambre de recirculation peut comprendre en outre un moyen de prélèvement séquentiel, ce dernier pouvant être un canal de prélèvement débouchant dans la chambre de recirculation et préférentiellement dans la zone de recirculation, ce qui permet le prélèvement séquentiel de concentrations de particules.

De préférence, ladite focalisation est effectuée sans pincement de flux dans une région de section sensiblement constante du canal principal, par injection dans le canal principal d'un fluide à partir dudit dispositif de focalisation présentant au moins un canal latéral sous une incidence $\alpha$ au moins égale à 5° et pouvant aller jusqu'à 90° pour focaliser les particules sur ladite paroi du canal principal en aval de la région où est effectuée l'injection latérale.

L'injection par un canal latéral débouchant dans le canal principal, sans striction de celui-ci, permet d'assurer facilement la focalisation des particules le long de la paroi opposée, sans imposer aux particules des contraintes de cisaillement préjudiciables.

Il peut être prévu, à l'opposé de la région d'injection et en vis-à-vis et/ou en aval de celle-ci, un prélèvement de fluide, par au moins un canal de prélèvement de fluide avantageusement de dimension inférieure à la taille des particules les plus fines circulant dans le canal principal. Ainsi peut être résolu le problème de la dilution.

Ladite ou l'une au moins desdites zone(s) de recirculation peut être comprise dans une cavité ou chambre, dite cavité ou chambre de recirculation de forme par exemple pseudo-rectangulaire, circulaire ou polygonale, dont une ouverture est en communication avec le canal principal.

La ou chaque chambre de recirculation peut être une région élargie de part et d'autre du canal principal sur une longueur donnée. Cette région élargie présente avantageusement une paroi en amont sensiblement perpendiculaire à l'axe de circulation du fluide dans le canal principal.

Il est ainsi possible de réaliser la fonction de concentration avec de faibles cisaillements, car, dans les chambres de recirculation, le fluide circule à faible vitesse (notamment entre $5\mu$m/s et $1000\mu$m/s pour une vitesse moyenne dans le canal principal comprise entre 1. mm/s et 50 mm/s), ce qui est particulièrement avantageux dans le cas d'objets biologiques peu cohésifs et fragiles, notamment d'amas de cellules et plus particulièrement d'îlots de Langerhans.

Plusieurs dispositifs de tri et de prélèvement peuvent être disposés en cascade de manière à recueillir des particules de tailles croissantes.

Au moins un dispositif de focalisation additionnel peut être disposé entre deux desdits dispositifs de tri et de prélèvement en cascade.

Les dimensions de l'ouverture de chaque dispositif de tri et de prélèvement permettent de sélectionner les particules ou amas de particules à prélever en fonction de la position de leur ligne d'écoulement, cette dernière dépendant de leur taille en aval de l'étage de focalisation.

Ladite ou l'une au moins desdites chambre(s) de recirculation peut être couplée à un canal de pompage de fuite en continu, dont le débit est notamment compris entre 0,1 $\mu$l/h et 500. $\mu$l/h. Avantageusement, ce canal de pompage de fuite en continu, ne permet pas de prélever les particules mais assure un pompage de fluide dans les zones de recirculation. En effet, l'objectif n'est pas de prélever des particules présentes dans la chambre concernée, mais de pomper le fluide présent dans ladite chambre.

Le débit dudit canal de pompage de fuite peut être ajustable, ce qui permet de modifier les lignes d'écoulement pénétrant dans une chambre de recirculation, et donc de sélectionner la taille des particules entrant dans ladite chambre. Cette variation de débit constitue ainsi un paramètre supplémentaire de réglage du procédé.

Afin de prélever les particules ayant été concentrées dans une chambre de recirculation, au moins un canal de prélèvement de particules peut-être couplé à au moins une chambre de recirculation, le prélèvement de particules étant réalisé de façon séquentielle, selon un débit faible, de l'ordre de quelques $\mu$l/min à quelques $\mu$l/h, en fonction du cisaillement que peuvent supporter les particules ou amas de particules.

Le procédé peut également être caractérisé en ce qu'il comporte au moins une rangée de piliers inclinés par rapport à l'axe du canal principal et s'étendant entre ladite paroi du canal principal le long de laquelle s'effectue ladite focalisation et la paroi opposée, pour dévier les particules du diamètre supérieur à un diamètre donné Dc, et en ce qu'il comporte une chambre de recirculation débouchant dans ladite paroi opposée du canal principal, au voisinage et en amont de la rangée de piliers.

Une rangée de piliers peut être disposée en aval d'un dispositif de focalisation et entre celui-ci et une chambre de recirculation et/ou entre deux chambres de recirculation.

D'autres caractéristiques et avantages de l'invention apparaîtront à la lecture de la description ci-après, en liaison avec les dessins dans lesquels :

- la figure 1 illustre la focalisation hydrodynamique des particules vers une paroi, selon l'invention,
- les figures 2a et 2b illustrent une dite focalisation hydrodynamique, associée avec un prélèvement de fluide, selon l'invention,

- les figures 3a à 3c illustrent la mis en oeuvre d'une zone de recirculation sous forme d'une cavité fermée, selon l'invention, dont les figures 4a à 4d illustrent des exemples de géométrie, la figure 4e étant un diagramme montrant le nombre de Reynolds Re limite pour obtenir une recirculation pour différents diamètres de chambres, et les figure 4f et 4g illustrant les flux de recirculation dans une chambre respectivement cylindrique et rectangulaire.
- la figure 5 illustre la mise en oeuvre de trois cavités en losange en cascade,
- la figure 6 illustre la mise en oeuvre d'une zone de recirculation sous forme d'une région élargie du canal principal,
- les figures 7a et 7b représentent un dispositif selon l'invention ayant une zone de recirculation dans une cavité de recirculation sous forme d'une région élargie associée avec un dispositif de prélèvement séquentiel des particules, respectivement en position fermée et ouverte,
- la figure 8 illustre un mode de réalisation d'un dispositif de prélèvement séquentiel de particules dans une zone de recirculation,
- les figures 9 à 11 illustrent le tri des particules selon leur taille en fonction du débit de prélèvement dans un canal transverse.
- la figure 12 illustre le tri des particules selon leur taille en fonction du débit de pompage de fuite 25. Elle correspond à un "zoom" de la chambre de recirculation représentée en figure 4f.
- les figures 13 à 17 illustrent le tri des particules selon leur taille et à l'aide d'une rangée de piliers pour chaque taille de particules à trier.
- la figure 18a illustre un exemple de réalisation du dispositif de la figure 17, avec mention des cotes.
- la figure 18b illustre une variante du dispositif de la figure 17.
- la figure 19 illustre les dimensions de ces piliers et définit leur écartement.

L'invention permet de réaliser une focalisation des particules submillimétriques entraînées dans un canal principal par un fluide ainsi que leur tri et leur prélèvement.

Elle peut également permettre une concentration de ces particules avant leur prélèvement.

Le tri s'effectue à l'aide d'un canal ou d'une chambre communiquant avec le canal principal par une ouverture dimensionnée en fonction du tri à réaliser.

La description ci-après montre divers dispositifs de tri et de prélèvement, selon trois modes de réalisation principaux :

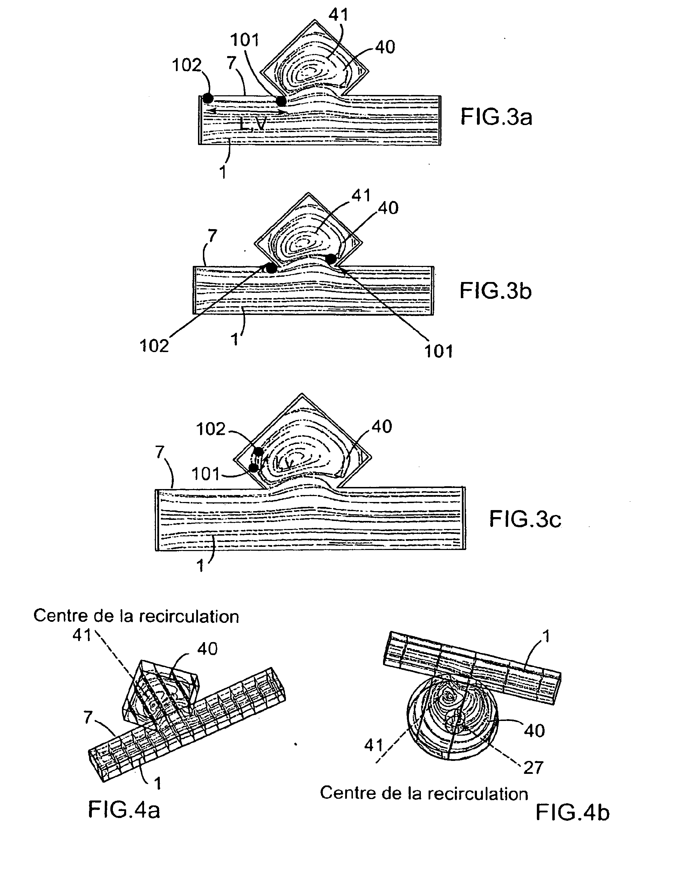

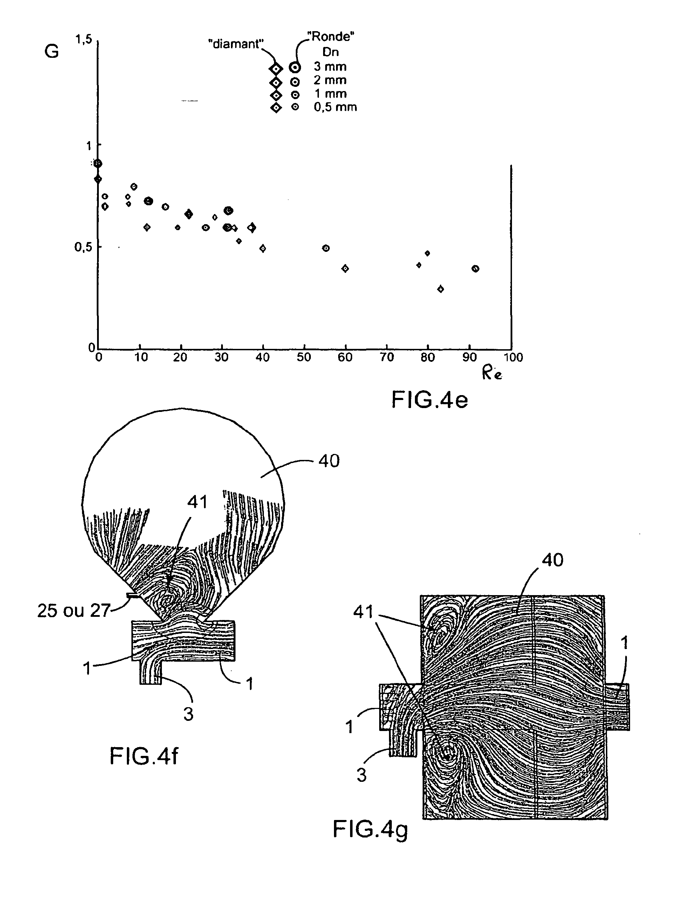

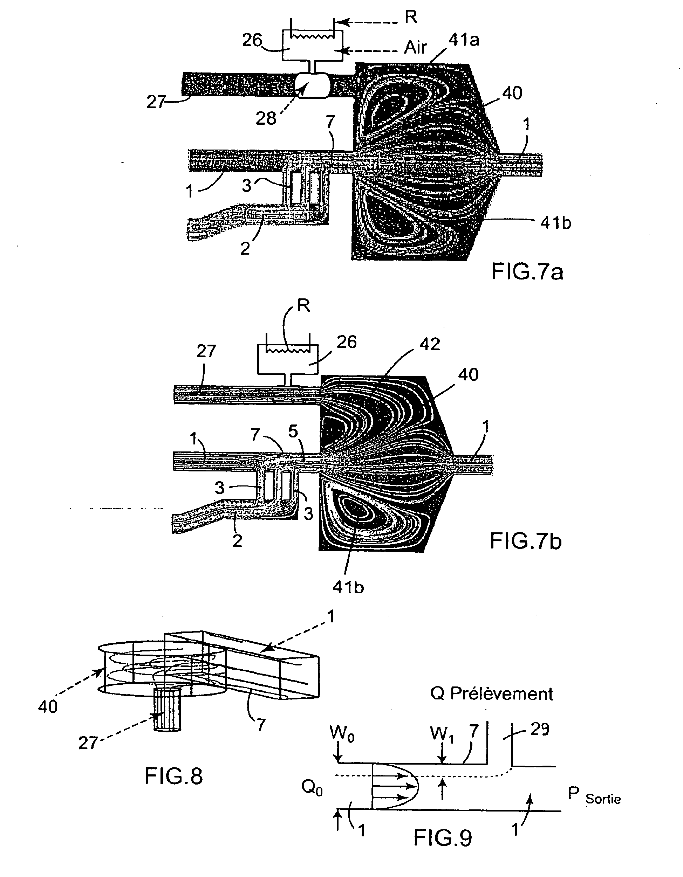

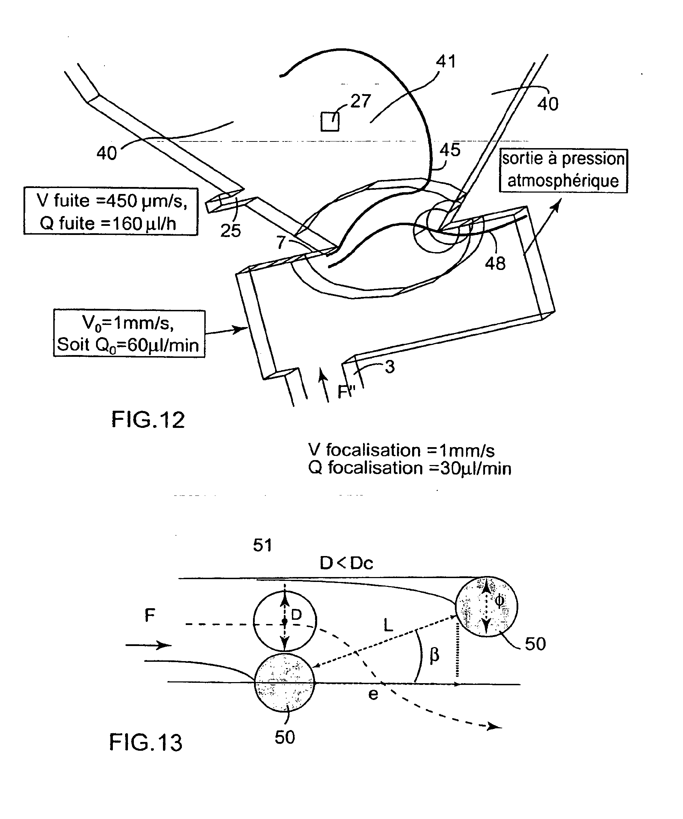

- un tri et concentration par une chambre de recirculation en communication avec le canal principal, avec un prélèvement séquentiel des particules (fig. 3a à 3c, 4a à 4d, fig. 4g, 5, 6, 8) ;
- un tri et concentration par une chambre de recirculation ayant un débit de fuite fixe ou variable, ainsi qu'un prélèvement séquentiel des particules ; le débit de fuite ainsi que la taille de l'ouverture en communication avec le canal principal déterminant 1a taille des particules triées, (fig. 4f et 12) ;
- un tri par un canal communiquant avec le canal central, dit canal transverse ayant un moyen de prélèvement continu dont le débit de prélèvement est fixe ou variable, ce débit de prélèvement ainsi que le diamètre d'entrée du canal transverse fixant la taille des particules triées. Ce mode de réalisation ne permet pas une concentration des particules mais seulement un tri et un prélèvement de celles-ci (fig. 9 à 11).
- un tri par un canal communiquant avec le canal central, dit canal transverse ayant un moyen de prélèvement séquentiel 27, dont le débit de prélèvement est fixe ou variable, ainsi qu'un moyen de pompage de fuite 25, les débits de prélèvement et de fuite ainsi que le diamètre d'entrée du canal transverse fixant la taille des particules triées. Ce mode de réalisation ne permet pas une concentration des particules mais seulement un tri et un prélèvement de celles-ci .

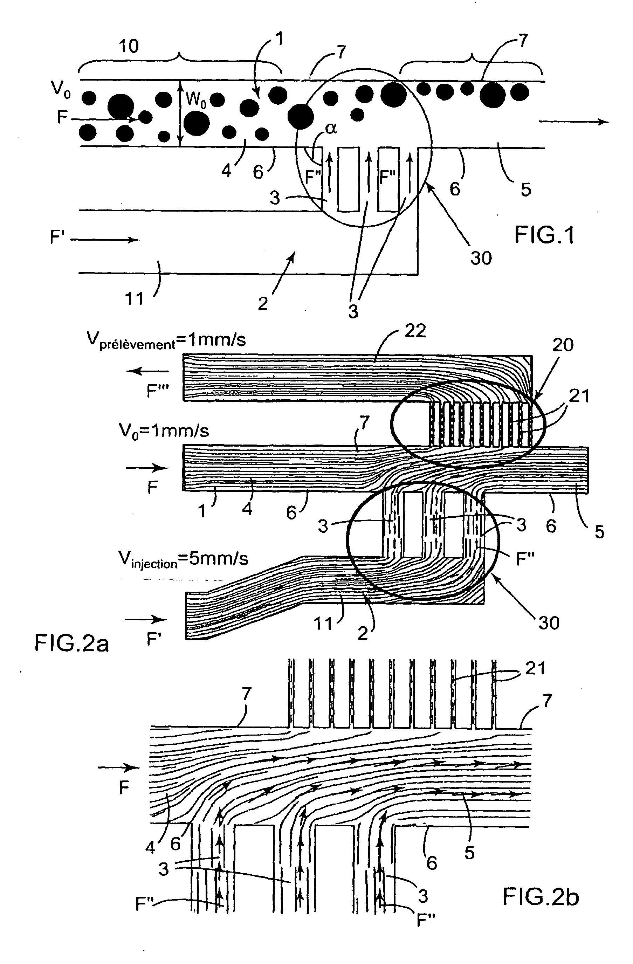

Selon la figure 1 ($\alpha$= 90°), une solution de particules 10 à trier circule dans le sens de la flèche F dans un canal principal 1 de section sensiblement constante avec une vitesse moyenne de flux Vo. Le canal principal 1 a une section de préférence carrée ou rectangulaire de largeur $w_o$ et de profondeur p.

Une solution de focalisation est injectée dans le sens de la flèche F' dans un canal auxiliaire 2 débouchant dans un ou plusieurs canaux latéraux 3 pour réaliser une injection latérale dans le sens des flèches F", de préférence perpendiculairement à la flèche F. Une incidence $\alpha$ comprise entre 5° et 90° dans le sens de l'écoulement dans le canal principal 1 peut être également choisie.

Cette injection latérale a pour effet que les particules 10 qui sont réparties de façon aléatoire dans le canal principal 1 dans la région amont 4 sont déviées dans une zone de focalisation 30 sur la paroi 7 et focalisées dans la région aval 5 du canal principal, région opposée à la paroi 6 à partir de laquelle a lieu l'injection latérale.

D'autres types de focalisation des particules sur les parois peuvent être mis en oeuvre, notamment, un système de focalisation basé sur un principe à la fois d'injection et de prélèvement de fluide comme décrit sur la Figure 2a. Dans ce cas, dans la zone de prélèvement de fluide 20, les canaux de prélèvement de fluide 21 qui débouchent dans un canal de prélèvement de fluide 22 sont suffisamment petits pour empêcher toute particule de pénétrer dans ces canaux transverses.

Le principal avantage de ce dispositif de focalisation par rapport à celui présenté dans la Figure 1, est qu'il permet d'imposer un débit de prélèvement de fluide pour contrecarrer l'effet de dilution provenant de la focalisation par injection. De plus, de par la disposition des canaux 21 en vis-à-vis et/ou immédiatement en aval de la zone d'injection 30, il permet d'améliorer la focalisation des particules à la paroi tout en limitant la vitesse nécessaire du fluide en entrée du système de focalisation par injection. La combinaison des deux éléments permet donc de diminuer à la fois la dilution et les forces de cisaillement qui s'appliquent sur les particules au niveau de la zone de focalisation.

Dans l'exemple de la figure 2a, le débit de prélèvement $Q_{prélèvement}$ (flèche F''') peut être le même que le débit d'injection $Q_{injection}$ pour limiter ou supprimer l'effet de dilution que produit l'injection. $V_{injection}$ et $V_{prélèvement}$ désignent la vitesse moyenne du fluide respectivement d'injection et de prélèvement.

La figure 2b est un agrandissement d'un détail de la figure 2a qui montre une bonne focalisation à la paroi des lignes d'écoulement du fluide contenant les particules à trier.

Le fluide injecté qui sert de tampon de focalisation peut être le même que celui qui contient les particules à trier. Cette condition n'est en rien obligatoire, et il est tout à fait possible d'utiliser deux tampons différents, de préférence miscibles.

Suite à cet étage de focalisation, les particules s'écoulent dans le fluide, selon un écoulement laminaire, en étant triées selon leur diamètre :

- les plus petites particules se retrouvent sur des lignes d'écoulement extrêmement proches des parois et peuvent être déviées vers des zones de recirculation.

- les plus grosses particules ont leur centre de gravite plus éloigné des parois, et de ce fait suivent des lignes d'écoulement différentes des plus petites particules, en suivant le flux continu et laminaire d'écoulement du fluide.

On aboutit ainsi à une répartition des petites et des grosses particules selon la position de la ligne d'écoulement, le positionnement des particules sur les lignes d'écoulement étant dépendante de leur centre d'inertie, et donc de leur taille, dans un écoulement laminaire.

Pour obtenir un tri efficace, il convient d'accentuer la différence de position entre les lignes d'écoulement des petites et des grosses particules.

Il est connu de l'art antérieur d'accentuer la différence de position par un brusque élargissement du canal principal ou par une aspiration ou pompage localisé du fluide, cette dernière possibilité étant décrite dans la demande WO2006/102258.

Les moyens de tri décrits dans cette demande ne sont pas paramétrables. De plus, aucune combinaison avec un moyen de concentration n'est décrite.

Une des originalités de la présente invention, est en effet la disposition, en aval d'un étage de focalisation, d'une ou plusieurs chambres de recirculation, accessibles à des particules en fonction de leur taille, ce qui permet un tri des particules selon leur taille, et d'en assurer le prélèvement tout en permettant éventuellement de concentrer les dites particules triées. La concentration de particules peut être obtenue par leur accumulation dans au moins une zone de recirculation, dans lesquelles les vitesses, et donc les forces de cisaillement, sont faibles..

L'article de SHELBY et Collaborateurs (voir supra) montre une concentration de particules pour des contraintes de cisaillement de l'ordre de $10^5$ Pa, grâce une accélération centrifuge dans la chambre de recirculation de l'ordre de $10^4$ m/s$^2$. De tels ordres de grandeurs ne sont pas compatibles avec la manipulation de particules ou d'amas de particules fragiles, tels les ilots de Langerhans. Un dispositif selon l'invention permet d'obtenir des zones de recirculation, et donc une concentration pour des taux de cisaillement de l'ordre de 5 Pa, car il ne fonctionne pas du tout sur la mise en oeuvre de la force centrifuge pour séparer et concentrer les particules. Les accélérations centrifuges sont par exemple de l'ordre de $10^{-5}$ m/s$^2$ dans la présente invention. L'invention peut donc être avantageusement utilisée pour la manipulation et la concentration de particules ou des amas de particules fragiles, tels les ilots de Langerhans.

Comme l'a montre l'état de l'art, la dilution est le gros inconvénient de la plupart des techniques hydrodynamiques de tri existantes. Pour résoude ce problème, on utilise le pouvoir concentrateur de zones de recirculation. Comme le montrent les Figures 3a à 3c, le pouvoir séparateur de ces chambres de recirculation 40 provient des fortes différences de vitesses existant entre le canal principal et la zone de recirculation, différence qui est fortement dépendante de la géométrie de la chambre.

On considère deux particules 101 et 102, qui sont animées d'une vitesse V et séparées d'une distance L dans le canal principal 1, et d'une vitesse v et séparées d'une distance 1 dans la chambre de recirculation 40.

Dans le canal principal les deux particules sont séparées de : $\tau = \dfrac{L}{V}$

Dans la cavité les deux particules sont séparées de : $\tau = \dfrac{l}{v}$

Lorsque les deux particules se retrouvent dans la cavité on a donc : $l = \dfrac{v}{V} L.$

Comme v < V, on a 1 < L. L'effet de la cavité est donc de rapprocher deux particules ce qui revient à les concentrer.

Différentes géométries peuvent être utilisées pour induire des zones de recirculation 40, parmi lesquelles on peut citer les chambres :

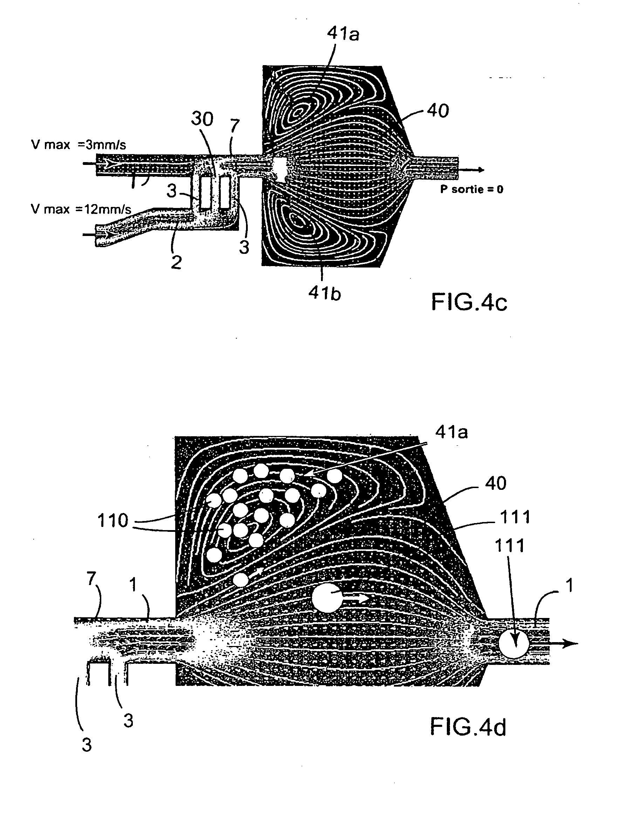

- polygonales, par exemple losange (ou "diamant") (Figure 4a), ou pseudo-rectangulaires ou rectangulaires notamment trapézoïdales (du type de celle des Figures 4c et 4d)
- circulaires, notamment cylindriques (Figure 4b)

La référence 27, présente sur la figure 4b, correspond à un canal de prélèvement de particules, qui sera décrit par la suite.

Dans le cas d'amas de particules fragiles, les modélisations ont montré que les vitesses nécessaires pour obtenir des zones de recirculation exploitables étaient particulièrement faibles dans les chambres de géométries circulaires ou polygonales communiquant avec le canal principal par une ouverture calibrée. C'est donc ce type de géométrie (cf. fig 4a ou 4b) qui sera à préconiser dans le cas ou l'on souhaite trier, concentrer et prélever des amas de particules fragiles et peu cohésifs, tels les ilots de Langerhans.

Dans chaque chambre, des zones de recirculation 41 peuvent être obtenues au-delà d'un nombre de Reynolds limite, dépendant notamment :

- de la géométrie de la chambre (ouverture de la cavité, profondeur, etc..)
- de la vitesse maximale dans le canal principal
- et de la géométrie du canal principal (notamment sa profondeur)

Le nombre de Reynolds Re s'exprime de la manière suivante :

$$Re = \frac{V_1 L}{\upsilon}$$

avec $V_1$ : Vitesse maximale du fluide en m/s
L : Dimension caractéristique de la géométrie considérée en m
$\upsilon$ : Viscosité cinématique du fluide en m²/s

G est défini comme le rapport entre la profondeur de la chambre et la longueur $D_h$ de son ouverture. La figure 4e montre des exemples de valeur du nombre de Reynolds Re en fonction du rapport G pour de l'eau ou un tampon aqueux, pour différentes valeurs de $D_h$ comprises entre 0,5 mm (pour une petite chambre) et 3 mm (pour une chambre dite de grande dimension) de forme ronde notamment cylindrique ou en forme de losange ("diamant").

La Figure 4c présente le principe de l'invention combinant le système de focalisation des particules à la paroi et les zones de concentration 41 a et 41b de certaines particules au niveau des chambres de recirculations 40, ici de forme pseudo-rectangulaire s'étendant de part et d'autre du canal principal 1. On comprendra que seules certaines particules, s'écoulant le long de certaines lignes d'écoulement, participent à la zone de recirculation 41a, et seront donc concentrées. Il s'agit des particules se déplaçant selon les lignes de champ les plus proches de la paroi 7, correspondant aux particules de plus faible diamètre. Seule la zone 41a contient des particules triées et est donc utilisée par le procédé.

La Figure 4d illustre le principe du microsystème de tri : en suivant les lignes d'écoulement très proches de la paroi, les plus petites particules 110 se déplacent vers la zone de recirculation 41a. Elles sont attirées vers le centre des zones des recirculations 41a par différentes forces, dont surtout la trainée hydrodynamique de Stockes, l'inertie et la gravité.

Les particules 111 plus grosses, donc plus éloignées de la paroi, continuent leur trajet et ressortent en aval de la chambre 40 de recirculation.

Les figures 4f et 4g montrent plus en détail les lignes d'écoulement dans et en dehors d'une zone de recirculation circulaire de diamètre 5 mm (4f) avec une vitesse moyenne en entrée de 1 mm/s (vitesse de focalisation 1 mm/s) pour une vitesse moyenne imposée de 2 mm/s dans le canal principal et une vitesse de l'ordre de 5 $\mu$m/s au centre de la cavité, et rectangulaire (4g) avec une vitesse d'entrée de 1 mm/s et une vitesse au niveau de l'orifice d'entrée de la cavité qui est de 50 mm/s (vitesse moyenne de focalisation : 50 mm/s). Les vitesses calculées dans les zones de recirculation 41 sont ainsi de l'ordre de quelques dizaines à quelques centaines de $\mu$m/s, et les vitesses de cisaillement maximales sont de l'ordre de 2,5 mm/s pour une chambre circulaire et de 60 mm/s pour une chambre rectangulaire. On remarquera que la chambre de recirculation décrite figure 4f dispose d'un canal de fuite 25, dont le débit de fuite est égal à 160 $\mu$l/h.

On notera que les caractéristiques des ouvertures des cavités permettent de dévier les lignes d'écoulement les plus proches de la paroi 7 opposée au système de focalisation, ces lignes d'écoulement correspondant à un certain diamètre de particules du fait de la focalisation réalisée en amont.

Plus précisément, si Dc est le diamètre maximal des particules à prélever, il est possible de définir les caractéristiques des ouvertures des cavités de façon à capter les lignes d'écoulement situées à une distance Dc/2 par rapport à la paroi 7 correspondant à des particules dont le rayon est inférieur à ou proche de Dc/2. Ces caractéristiques peuvent être définies par des modélisations réalisées avec un logiciel adapté, par exemple le logiciel COMSOL bien connu de l'homme du métier. Les paramètres de modélisation sont les dimensions de la (les) chambres, du canal principal, la nature de fluide (en particulier la viscosité cinématique), ainsi que les débits ou pressions imposés en entrée/sortie des différents canaux.

Un tel logiciel peut également être utilisé pour modéliser des lignes d'écoulement dans les zones de recirculation, permettant ainsi d'ajuster les paramètres indiqués ci-dessus afin d'optimiser, par exemple, le pouvoir concentrateur obtenu par de telles zones.

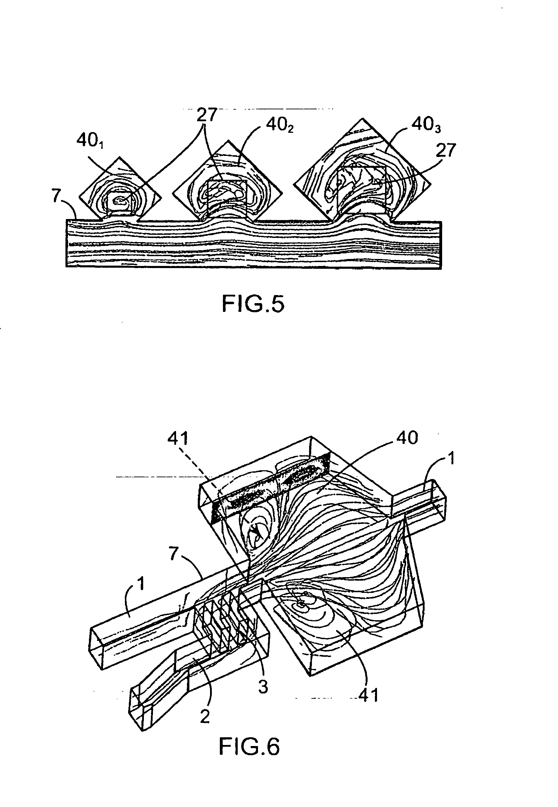

La figure 6 représente la modélisation des lignes d'écoulement dans un microsystème de profondeur 1 mm, comprenant un étage de focalisation précédant une chambre pseudo-rectangulaire. Elle illustre le pouvoir concentrateur en comparant les vitesses caractéristiques dans le canal principal 1 ($V_{max}$ = 50mm/s après la focalisation) et au niveau de la recirculation 41 ($V_{max}$ de l'ordre de 0,5 à 1mm/s selon la position dans la recirculation). L'apparition ou non d'une recirculation, en aval d'une focalisation peut donc être modélisée comme il a été indiqué ci-dessus.

En plaçant plusieurs cavités 40 en cascade les unes à la suite des autres, on peut trier, piéger et concentrer dans chaque chambre des particules de tailles différentes. Dans le cas particulier où la taille et le nombre des cavités mises en cascade sont importantes, il peut être judicieux de rajouter entre deux cavités un système de focalisation de façon à s'assurer que les particules sont bien situées contre la paroi et peuvent pénétrer dans la cavité de concentration.

La figure 5 montre en vue de dessus trois cavités en losange $40_1$, $40_2$ et $40_3$ qui sont mises en cascade. Les carrés qui apparaissent au centre de ces cavités correspondent à des canaux de prélèvement de particules 27 qui seront explicités plus tard. Dans le canal principal, la vitesse maximale est par exemple de 1,9 mm/s et au niveau des cavités $40_1$ à $40_3$, elle est de l'ordre de 70 $\mu$m/s (elle s'y échelonne entre 5 $\mu$m/s et 70 $\mu$m/s). La très nette différence de vitesse entre le canal principal 1 et les cavités $40_1$ à $40_3$ permet de concentrer les particules.

Dans ce cas, la sélection par taille des particules, réalisée à l'ouverture de ces cavités, est opérée par ordre croissant : les plus petites particules sont collectées par la cavité $40_1$, les particules un peu plus larges collectées par la cavité $40_2$ etc..

Système de prélèvement des particules

L'invention comprend également un système de prélèvement permettant de récupérer les particules accumulées dans les chambres de recirculation 40.

Il s'agit d'un prélèvement séquentiel à partir d'un canal de prélèvement 27 commandé par une vanne fluidique 26. Lorsque la vanne est fermée (Figure 7a) les particules s'accumulent au niveau des zones de recirculation 41 a et 41 b des chambres 40 où s'effectue la recirculation. Une fois les particules concentrées, la vanne 26 est ouverte (Figure 7b) et les lignes d'écoulement sont déviées suite à l'ouverture de la vanne 26, ce qui permet de récupérer les particules concentrées et triées dans le canal 27.

On peut par exemple utiliser comme représenté, une vanne fluidique 26 dont l'ouverture et la fermeture sont contrôlées thermiquement : lorsque l'air est maintenu à température ambiante, la vanne 26 est ouverte et le prélèvement est réalisé en supprimant la circulation 41 et en formant un écoulement 42. En augmentant la température de l'air contenu dans la chambre (au moyen d'une résistance chauffante R), on augmente la pression du gaz contenu dans la chambre. Le gaz 28 s'introduit alors dans le canal 25 et vient bloquer le passage du fluide.

Le mode de réalisation représenté à la Figure 8 met en oeuvre un canal de prélèvement 27 (voir aussi figure 4b) au centre d'une cavité fermée 40, par exemple circulaire, de concentration des particules. Le débit dans le canal de prélèvement 27 est faible (quelques $\mu$l/min à quelques $\mu$l/h).

Couplage passif tri/concentration avec piliers

Selon un autre mode de réalisation, l'invention met en oeuvre un système de tri couplé à des zones de recirculation avec un couplage également purement passif, dans le sens où c'est seulement la géométrie du dispositif qui provoque la pénétration des particules dans les zones de recirculation.

Cette configuration est préférée dans le cas d'amas de cellules de taille importante, tels les îlots de Langerhans.

Le fonctionnement du dispositif comprend 2 étapes : tout d'abord, les particules sont focalisées sur la paroi 7 opposée à la chambre de recirculation, ainsi que décrit ci-dessus. Le tri est ensuite assuré par une rangée 60 de piliers 50 formant un angle déterminé β par rapport à l'axe du canal principal 1. Les caractéristiques géométriques de ces piliers 50 de diamètre φ sont telles que les particules plus petites qu'une taille critique Dc ne sont globalement pas déviées, car elles franchissent l'obstacle constitué par la ligne de piliers 50, tandis que les particules plus grandes que la taille critique Dc sont déviées à chaque rangée de piliers, et ce toujours dans la même direction, vers la chambre de recirculation 40. On notera que dans ce cas, l'ouverture de la chambre de recirculation est préférentiellement réalisée sur la paroi opposée à la paroi 7, c'est-à-dire du même côté que le dispositif de focalisation. Ce dispositif permet d'effectuer un tri par taille décroissante.

La ligne 60 de piliers 50 dans ce dispositif permet d'effectuer un tri par taille en déviant les particules selon leur taille, comme décrit par exemple par HUANG dans "Continuous particles séparation through deterministic lateral displacement" paru dans Science, 2004, 304 p. 987 à 990, à la différence que seule est mise en oeuvre une ligne de piliers - au lieu d'un réseau de piliers - ce qui est possible grâce à la focalisation préalable des particules le long de la paroi 7. Elle permet ainsi de s'assurer que les particules de taille choisie pénètrent dans les zones de recirculation : en effet l'encombrement stérique d'un pilier est tel que ce pilier impose à la particule de changer de ligne d'écoulement, ce qui la force à pénétrer dans les zones de recirculation.

Lorsque le dispositif comprend une telle ligne de piliers permettant d'effectuer un tri par taille, par un dispositif de type « DLD », elle est préférentiellement située en aval de la focalisation. Mais on peut également imaginer une telle ligne de piliers sans prévoir un étage de focalisation en amont. Dans ce cas, cette ligne assurera la fonction de focalisation et de tri par taille.

Le dimensionnement est essentiellement basé sur la morphologie des lignes de courant.

Lorsque la vitesse de la particule est faible (c.à.d. que son inertie est négligeable), une particule de petite taille (diamètre inférieur à Dc) suit la ligne de courant passant par son centre de gravité (Figure 13) comme par exemple la particule 51 de diamètre inférieur à Dc.

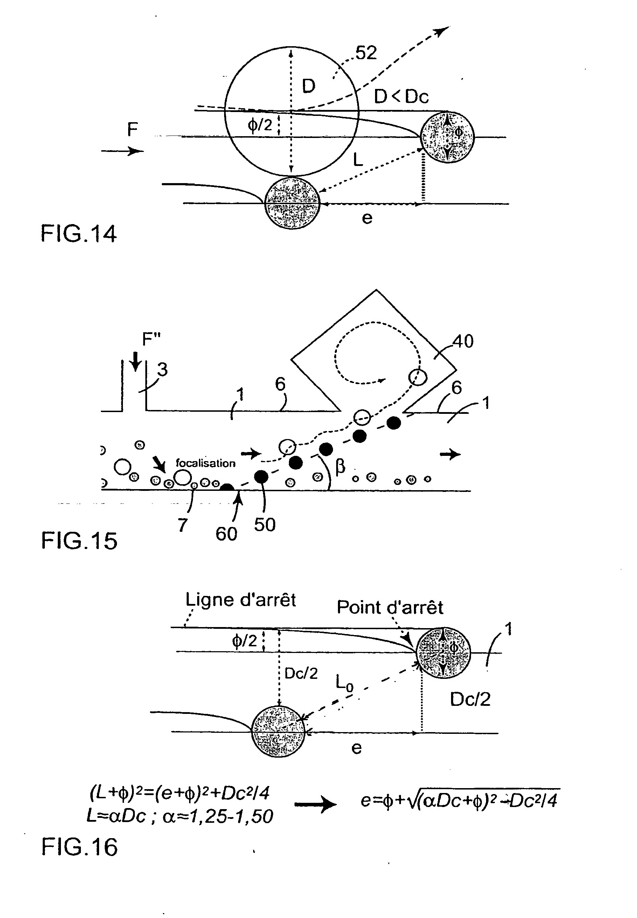

Par contre, une particule de diamètre supérieur ou égal à Dc est repoussée par la ligne de piliers, du fait de son encombrement stérique. La ligne de pilier la dévie donc de sa ligne de courant (cf. Figure 14), comme la particule 52, dont le diamètre est supérieur à Dc.

Au final, les particules plus petites que la taille critique Dc continuent leur trajectoire à l'intérieur du canal 1, mais les autres sont repoussées dans la zone de recirculation par la ligne de pilier 50 dont l'axe est incliné d'un angle β par rapport au sens de l'écoulement F, et elles y sont accumulées (cf. Figure 15). On notera qu'une rangée 60 de piliers peut être disposée entre deux chambres de recirculation 40 avec ou sans interposition d'un dispositif de focalisation, ce qui permet de réaliser des tris par tailles décroissantes. Les particules les plus larges étant plus facilement déviées, les cavités disposées en aval des piliers collecteront préférentiellement les particules qui auront été déviées, c'est-à-dire les plus larges.

Le dimensionnement de ce système est donné par le schéma de la Figure 16.

Les lignes de courant qui viennent s'arrêter sur les piliers 50 (cf. au niveau du point d'arrêt) sont les lignes critiques qui orientent les particules :

- soit vers la sortie du canal principal, c'est-à-dire que les particules passent alors au travers de la ligne 60 de piliers 50 sans être déviées
- soit vers les chambres de recirculation 40, lorsque la particule est déviée à chaque pilier 50 pour des raisons d'encombrement stérique.

Ces lignes critiques ne sont pas strictement parallèles à l'axe du canal et on peut estimer qu'à quelques centaines de microns du pilier, la ligne critique est située à une distance $\Phi/2$ de l'horizontale passant par le centre du pilier de diamètre $\Phi$. Ceci impose un espacement transverse entre deux piliers de l'ordre de Dc/2.

L'espacement axial $(e + \Phi)$ entre les centres de deux piliers 50 est donné par application du théorème de Pythagore :

$$(L_0 + \Phi)^2 = (e + \Phi)^2 + Dc^2/4$$

Comme la distance $L_0$ entre deux piliers doit être suffisamment grande pour ne pas faire un filtre, nous avons la condition supplémentaire

$$L_0 \geq' a\, Dc \; ; \; a \approx 1.25 - 1.50$$

On déduit l'espacement axial e entre les piliers 50 :

$$e = -\Phi + \sqrt{\left[(aDc + \Phi)^2 - Dc^2/4\right]}$$

cos β = ( e+Φ) / ( $L_0$+Φ), et Φ, e et $L_0$ sont imposés, donc β est fixe.

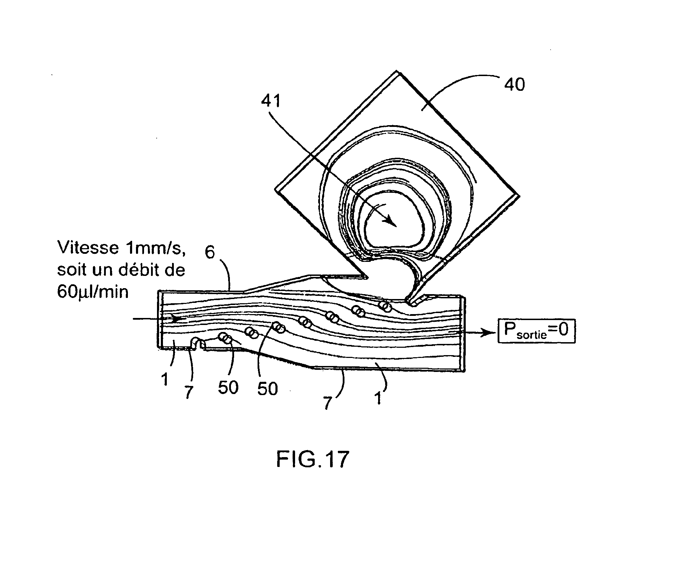

La figure 17 est une vue d'ensemble d'un dispositif de tri et de recirculation mettant en oeuvre une ligne 60 de piliers 50 ainsi qu'un élargissement 1' du canal principal au niveau de la ligne 60 de piliers 50.

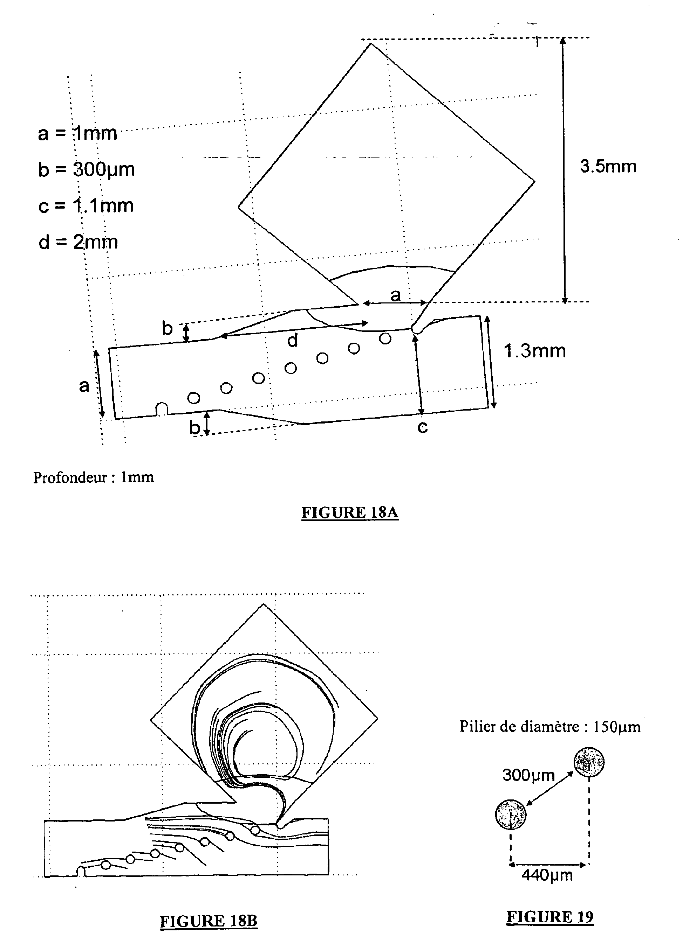

On remarque sur cette figure 17 un élargissement du canal principal en amont de la zone de recirculation, une telle forme permettant d'ajuster le rayon de courbure des lignes de champ à l'entrée de chaque zone de recirculation. Le rayon de courbure peut ainsi être réalisé de telle sorte que les particules se déplaçant sur les lignes de champ les plus proches de ladite entrée soient extraites de leur ligne de champ par inertie au niveau du rayon de courbure (cf. figure 17). Un tel effet sera d'autant plus utile que les particules à concentrer sont de plus grande taille. On évite alors qu'un débit de fuite soit prévu à l'intérieur de la zone de recirculation. La figure 18a montre un exemple coté d'un tel dispositif, la dissymétrie étant obtenue par un élargissement progressif du canal principal en amont de la zone de recirculation. Selon ce mode de réalisation, l'élargissement du canal principal en amont de l'entrée de la zone de recirculation est réalisé par un décrochement de la paroi à laquelle la zone de recirculation fait saillie, et par un décrochement de la paroi opposée. Dans cette figure 18a, la focalisation n'est pas visible mais en bien sûr réalisée en amont de la ligne de piliers et du côté de la chambre de recirculation.

La figure 18b représente une configuration très proche, la seule différence étant que l'élargissement du canal principal en amont de la zone de recirculation n'est obtenu qu'en produisant un décrochement de la paroi au niveau de laquelle la zone de recirculation fait saillie.

Dans les figures 17, 18a et 18b, en amont de la zone de recirculation, une rangée de piliers de type « DLD » permet d'augmenter la probabilité de pénétration des particules dans la chambre de recirculation. Une telle rangée de piliers est optionnelle.

La figure 19 indique les dimensions des piliers et définit leur écartement, une telle ligne de piliers étant adaptée à la déviation de particules de diamètre 200 $\mu$m.

La chambre de recirculation 40 représentée aux figures 15 et 17 peut présenter un canal de prélèvement 27, pour permettre de prélever les particules après concentration (par exemple comme à la figure 7a ou 7b).

Exemples de modélisation d'un système de tri et de concentration

Exemple 1 : dispositif de tri, concentration et prélèvement comportant une ligne de piliers.

Le dispositif de tri selon la figure 17 est conçu de telle sorte que les particules de taille inférieure à 200$\mu$m passent au travers de la ligne de piliers sans être globalement déviées, tandis que les particules de taille supérieure à 200$\mu$m sont déviées à chaque pilier vers la chambre de recirculation.

Les caractéristiques du système proposé ont été déterminées à partir des règles de dimensionnement indiquées :

- Diamètre critique De du tri : 200$\mu$m
- Diamètre des piliers : Φ = 150$\mu$m
- Espacement transverse entre deux piliers : 100$\mu$m (Dc/2)
- Espacement axial e + Φ = 440$\mu$m, $L_0$ = 300$\mu$m

Selon un autre mode de réalisation, l'invention met en oeuvre un système de tri couplé à des zones de recirculation avec un couplage actif, dans le sens où la géométrie du dispositif couplée à un pompage de fuite provoque la pénétration des particules dans les zones de recirculation.

Un dispositif de pompage de fluide, dit pompage de fuite peut également être prévu à l'intérieur d'une ou plusieurs chambres de recirculation.. Par l'exemple 2, on comprendra que le principal avantage du pompage de fuite est qu'il peut être aisément modulé, ce qui permet d'ajuster en conséquence les propriétés hydrodynamiques de l'invention.

Exemple 2 : dispositif de tri et prélèvement par un canal transverse

La figure 9 illustre un exemple dans lequel un tri de particules est réalisé par un canal transverse 29, disposé de préférence perpendiculairement au canal principal Dans cet exemple, un moyen extérieur de prélèvement continu permet d'appliquer un débit de prélèvement $Q_{prélèvement}$ à travers ledit canal transverse.

Pour qu'une particule pénètre dans le canal transverse 29, il faut que son rayon soit plus petit ou proche de la largeur du flux entrant dans la cavité $w_1$ (voir figure 9). Cette largeur correspond à la distance w1, au-delà de laquelle les lignes d'écoulement ne pénètrent pas dans l'ouverture : en effet, les particules dont le centre d'inertie se déplace sur une ligne d'écoulement située au delà de la distance w1 par rapport à la paroi 7, ne sont pas dirigées vers le canal transverse 28 et restent donc dans le canal principal. En revanche, les particules dont le centre d'inertie se déplace sur une ligne d'écoulement située en deçà ou proche de la distance w1 par rapport à la paroi 7 sont déviées vers l'ouverture. On peut donc parler d'une collecte sélective par rapport à la taille. La taille maximale de la particule pouvant pénétrer dans la cavité est donc égale à 2w1.

Partant de cette considération, l'intégration du profil de vitesse parabolique de Purday permet de relier la taille des particules triées au débit de prélèvement continu $Q_{prélèvement}$, $V_{prélèvement}$ désignant la vitesse du fluide prélevé.

$$\frac{Q_{prélèvement}}{Q_0} = \left[\frac{r+1}{r}\right]\left\{\frac{w_1}{w_0} - \frac{1}{2(r+1)}\left[1-(1-\frac{w_1}{w_0/2})^{r+1}\right]\right\} \quad (1)$$

où $w_0$ est la largeur du canal principal, $w_1$ le rayon de la particule triée et b la profondeur du canal, et $Q_0$ le débit dans le canal principal 1.

r est un exposant qui dépend du rapport $\alpha = w_0/b$ si $w_0 \leq b$ ou $\alpha = b/w_0$ si $b \leq w_0$.

On a r = 2 pour $\alpha \leq 1/3$ et r = 2 + 0.3 $(\alpha - 1/3)$ pour $\alpha > 1/3$.

En ajustant le débit de prélèvement continu, il est possible de récupérer et de concentrer dans une cavité différentes tailles de particules, la taille maximale d'une particule pouvant pénétrer dans la cavité étant $2_1w$. On voit donc qu'il est possible de collecter sélectivement des particules par rapport à leur taille en fonction des paramètres géométriques et des paramètres hydrodynamiques du dispositif, les paramètres hydrodynamiques pouvant être le débit de prélèvement continu $Q_{prélèvement}$, la vitesse du fluide prélevé $V_{prélèvement}$ et le débit dans le canal principal $Q_0$. Cet exemple décrit un canal transverse, mais il est transposable à des dispositifs de collecte dont la fenêtre d'entrée peut être assimilée à un tel canal, et en particulier une chambre de recirculation 40.

Explication du caractère reconfigurable du dispositif :

La taille des particules triées dépend à la fois du débit de prélèvement continu et de la géométrie.

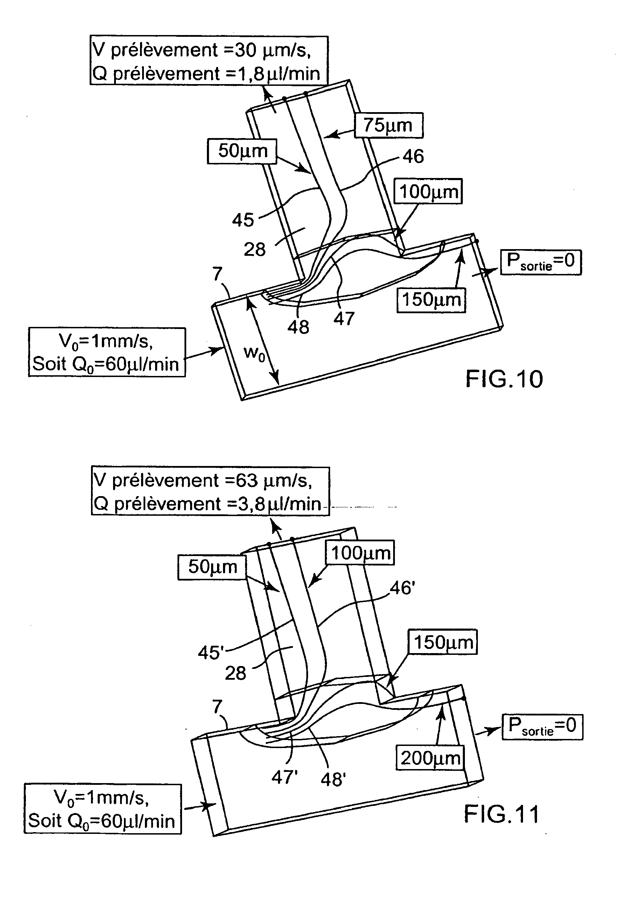

Pour les dimensions suivantes (figure 10) :

- canal principal : 1mm de large ($w_0$ = 1 mm) pour une profondeur de 1mm
- canal transverse : 1mm de large pour une profondeur de 1mm

Et une taille de tri souhaité de $200\mu$m donc $w_1 = 100\mu$m

L'application numérique de (1) donne :

$$\frac{Q_{prélèvement}}{Q_0} = \frac{V_{prélèvement}}{V_0} = 0,0295$$

$V_0$ désignant la vitesse moyenne du fluide dans le canal principal 1.

donc si $V_0$ = 1 mm/s, on a $V_{prélèvement}$ = 30 $\mu$m/s

Des simulations numériques montrent (cf. Figure 10) que les lignes d'écoulement respectivement 45 et 46 situées à $50\mu$m et $75\mu$m du bord 7 dans le canal principal 1 pénètrent complètement dans le canal transverse 29, que la ligne d'écoulement 47 située à $100\mu$m de la paroi 7 est à la limite de la pénétration. Enfin toute ligne d'écoulement située à plus de 100µm de la paroi 7 (par exemple la ligne 48 située à 150 µm de la paroi 7) ne pénètre pas dans le canal transverse 29.

En conservant la même géométrie, et en jouant sur les débits de fuite, on peut obtenir que la taille critique du tri soit 300µm :

$$\frac{Q_{prélèvement}}{Q_0} = \frac{V_{prélèvement}}{V_0} = 0,0635$$

En conservant une vitesse en entrée du canal principal de 1mm/s, cela impose une vitesse de prélèvement de 63µm/s. Comme le montre la simulation Figure 11, on a cette fois une pénétration complète des lignes d'écoulement 45' et 46' éloignées respectivement de 50 µm et 100µm de la paroi 7, tandis qu'une ligne d'écoulement éloignée de plus de 150µm de la paroi 7, par exemple la ligne d'écoulement 48' située à 200 µm de celle-ci, ne peut pénétrer dans le canal transverse 29, la ligne d'écoulement 47' située à une distance de 150 µm de la paroi 7 étant à la limite de pénétration.

Dans l'exemple ci-dessus, le guidage de lignes d'écoulement était réalisé à travers un canal 29 perpendiculaire au canal principal 1, avec un moyen permettant d'appliquer un débit de prélèvement continu, permettant ainsi de sélectionner les particules situées sur les lignes d'écoulement déviées, c'est-à-dire situées à une certaine distance de la paroi 7.

Exemple 3 : Tri, concentration et prélèvement dans une chambre de recirculation

Ce même principe peut-être décliné sur d'autres géométries, telles les cavités de recirculation, à l'intérieur desquelles on peut avantageusement disposer d'un moyen externe de pompage de fuite 25, produisant un débit de fuite ajustable, ce qui permet de conférer un caractère paramétrable au dispositif. Ce moyen de pompage de fuite n'est pas indispensable, mais il constitue un paramètre supplémentaire, permettant de modifier les propriétés hydrodynamiques de l'invention, les autres paramètres (dimensions, viscosité du fluide, débit principal) étant fixes. De préférence, le pompage de fuite est réalisé à travers un canal de pompage de fuite, trop étroit pour que des particules y pénètrent, et débouchant dans une partie de chambre de recirculation située à l'extérieur d'une zone de concentration de particules. Un tel canal de fuite 25 peut être associé à toute chambre 40 de recirculation, disposée en aval d'un étage de focalisation 30. Une ligne de piliers 50 peut précéder l'ouverture de ladite chambre de recirculation.

On peut donc coupler un tel canal de fuite 25 à une zone de recirculation 41 afin de réaliser une concentration de particules triées selon leur taille.

L'exemple ci-dessous (figure 12) illustre un tel couplage : ce dispositif a été dimensionné de façon à ce que les particules de diamètre inférieur à 200µm ($w_1 = 100$µm) pénètrent dans les zones de recirculations 41 et se concentrent.

Le dispositif est composé d'une zone de focalisation/tri et d'une zone de concentration dans les recirculations qui apparaissent au niveau de la cavité circulaire de 5mm de diamètre. Les caractéristiques géométriques de l'exemple donné ci-dessous sont les suivantes :

- canal principal 1 : 1mm de large (wo = 1mm) et 1mm de profondeur (p = 1 mm)
- canal de focalisation 3 : 500µm de large et 1mm de profondeur
- canal de pompage de fuite 25 : 100µm de large sur 1mm de profondeur
- cavité 40 de diamètre 5mm.

Si l'on impose une vitesse moyenne $V_0$ en entrée de 1mm/s, une vitesse de focalisation $V_{focalisation}$ de 1mm/s et une pression en sortie égale à la pression atmosphérique, l'application de la formule (1) indique que la vitesse de fuite doit être de 450µm/s :

$$Q_{focalisation} = V_{focalisation} * S = (1.10^{-3}) * (500.10^{-6}) * (1.10^{-3}) = 0.5.10^{-9} \text{ m}^3/\text{s}$$

$$Q_{principal} = V_{principal} * S = (1.10^{-3}) * (1.10^{-3}) * (1.10^{-3}) = 1.10^{-9} \text{ m}^3/\text{s}$$

$$Q_0 = 1,5.10^{-9} \text{ m}^3/\text{s}$$

Avec S = wo * P

Donc: $Q_{fuite} = 0,03*Q_0 = 0,045.10^{-9} = V_{fuite} \times S$
Ce qui donne :

$$V_{fuite} = \frac{Q_{fuite}}{(100.10^{-6})*(1.10^{-3})} = \frac{0.045.10^{-9}}{(1.10^{-4})*(1.10^{-3})} = 0.045.10^{-2}\,m/s = 450\,\mu m/s$$

La modélisation numérique ci-dessous montre que :

- les lignes d'écoulement à 50μm de la paroi 7 après focalisation pénètrent bien dans la cavité de recirculation 40, tandis que celles situées par exemple à 150μm de la paroi 7 sont exclues des zones de recirculations.
- et le pompage de fuite 25 ne supprime pas les zones de recirculation (cf. figure 4f). A la figure 12, au milieu de la zone de recirculation 41, on trouve un canal de prélèvement séquentiel 27.

Pour illustrer le caractère paramétrable de l'invention, un exemple est donné en liaison avec une cavité circulaire 40 (figures 4b ou 8) de diamètre 1,5mm avec $Q_0$ = 15 μl/mn, canal principal 1 carré 500 μm x 500 μm, canal de pompage de fuite 25 carré 300 μm x 300 μm.

- a) $V_{max}$ = 1,8 mm/s (vitesse maximale dans le canal principal) ; $V'_{max}$ = 50 μm/s (vitesse maximale dans la cavité)
  Taille critique $2w_1$ = 100 μm avec Q fuite = 26 μl/h
- b) $V_{max}$ = 1,8 mm/s ; $V'_{max}$ = 18 μm/s
  $2w_1$ = 50 μm avec Q fuite = 6,9 μl/h
- c) $V_{max}$ = 1,8 mm/s ; $V'_{max}$ = 14 μm/s
  $2w_1$ = 10 μm avec Q fuite = 0,3 μl/h

La vitesse maximale des particules dans la cavité 40 est respectivement 36 fois, 100 fois et 129 fois plus faible que la vitesse maximale dans le canal principal. On comprendra que de telles vitesses sont adaptées à la concentration d'amas de cellules fragiles et peu cohésifs, tels les ilots de Langerhans.
La notion de taille critique signifie que les particules plus petites que la taille critique pénètrent dans la cavité et s'y concentrent, alors que les particules plus grandes que cette taille critique continuent dans le canal principal sans pénétrer dans la cavité ou en ressortent.
L'exemple ci-dessus montre qu'avec un même débit d'entrée $Q_0$ et une même géométrie, il est possible de faire varier la taille critique dans un rapport de 10 (entre 10 μm et 100 μm) en faisant varier le débit $Q_{fuite}$.
Le dispositif selon l'invention est ainsi plus souple d'utilisation puisque avec les mêmes caractéristiques géométriques, l'utilisateur peut obtenir différentes tailles critiques de tri. Ceci est avantageux, notamment vis-à-vis de la technique décrite par M. YAMADA et M. SEKI (article précité Lab Chip 2005, p. 1233 à 1235) dans lequel il faut ajuster des résistances fluidiques des canaux transverses ou bien vis-à-vis des techniques connues par pincement de flux qui ne permettent pas de définir une taille critique.
L'invention peut être utilisée pour trier et concentrer des particules biologiques ou non. Ainsi en adaptant les dimensions du microsystème l'invention pourrait être utilisable par exemple pour :

- des particules de polymère, des nano-particules, des particules métalliques
- des cellules animales ou végétales, des organelles, des microorganismes, des protéines, des molécules d'ADN...

En particulier ce dispositif de tri/concentration peut être applicable au tri des îlots de Langerhans, amas de cellules fragiles de taille variant entre 20μm et 500μm.
L'obtention d'une population monodispersée d'ilots peut être intéressante par exemple pour réaliser des études de pharmacocinétique, ou encapsuler les îlots dans des capsules de taille adaptée.
Un dispositif de tri par taille d'amas de cellules est en soit un aspect innovant de l'invention car de par leur taille et leur fragilité un seul dispositif permet à l'heure actuelle de trier ces amas, mais ce n'est en aucun cas un dispositif microfluidique.
Le microsystème est stérilisable de façon à pouvoir l'utiliser pour le tri et la concentration de particules biologiques.
En entrée, le déplacement du fluide peut être contrôlé en pression ou en débit.
Le dispositif est principalement prévu pour fonctionner en phase aqueuse ou en milieu de culture qui d'un point de vue fluidique se comporte comme l'eau.

Toutefois, il est possible de l'utiliser avec d'autres types de liquide ou solutions de polymères à conditions d'adapter les géométries des chambres de recirculation au liquide considéré en tenant compte de la densité et de la viscosité du liquide considéré.

En outre, le dispositif de tri pourra avantageusement être stérilisable.

## Revendications

1. Procédé de tri de particules submillimétriques ou d'amas de particules submillimétriques entraînées dans un fluide circulant dans une direction axiale d'un canal principal, les particules ayant une densité différente de celle du fluide, procédé mettant en oeuvre dans une première région du canal principal, une focalisation des particules le long d'une paroi (7) du canal principal (1) par au moins un dispositif de focalisation et en aval de ladite région, une collecte de particules dans au moins un dispositif de tri et de prélèvement en communication avec le canal principal par une ouverture de telle sorte qu'une sélection des particules collectées soit réalisée par le dispositif de tri et de prélèvement en fonction de la taille desdites particules, et le ou l'un au moins des dispositif(s) de tri et de prélèvement étant une chambre de recirculation (40) en communication avec le canal principal (1) et présentant au moins une zone de recirculation (41) pour concentrer les particules collectées.

2. Procédé selon la revendication 1, **caractérisé en ce que** ladite chambre de recirculation (40) comprend en outre un moyen de prélèvement séquentiel (27).

3. Procédé selon la revendication 1 ou 2, **caractérisé en ce que** ladite première région a une section sensiblement constante et **en ce que** ladite focalisation est effectuée par une injection dans le canal principal d'un fluide à partir dudit dispositif de focalisation lequel présente au moins un canal latéral (3) sous une incidence $\alpha$ au moins égale à 5° et de préférence sensiblement égale à 90° pour focaliser les particules sur ladite paroi (7) du canal principal (1) en aval de la région où est effectuée l'injection latérale.

4. Procédé selon une des revendications précédentes, **caractérisé en ce qu'**il met en oeuvre à l'opposé de la région d'injection et en vis-à-vis et/ou en aval de celle-ci, un prélèvement par au moins un canal de prélèvement (21).

5. Procédé selon la revendication 4, **caractérisé en ce que** la dimension du ou des canaux de prélèvement (21) est inférieure à celle des particules les plus fines circulant dans le canal principal.

6. Procédé selon une des revendications précédentes, **caractérisé en ce que** la vitesse moyenne dans le canal principal (1) est comprise entre 1. et 50. mm/s et **en ce que** la vitesse dans une zone de recirculation (41) et comprise entre 5 et 1000 $\mu$m/s.

7. Procédé selon une des revendications précédentes, **caractérisé en ce que** ladite ou l'une au moins desdites chambre(s) de recirculation (40) est couplée à un canal de pompage de fuite (25).

8. Procédé selon une des revendications précédentes, **caractérisé en ce qu'**il présente une pluralité desdits dispositifs de tri et de prélèvement en cascade ($40_1$, $40_2$, $40_3$) agencés de manière à recueillir des particules de tailles croissantes.

9. Procédé selon la revendication 8, **caractérisé en ce qu'**au moins un dispositif de focalisation additionnel est disposé entre deux desdits dispositifs de tri et de prélèvement en cascade.

10. Procédé selon une des revendications précédentes, **caractérisé en ce qu'**il comporte au moins une rangée (60) de piliers inclinés par rapport à l'axe du canal principal (1) et s'étendant entre ladite paroi (7) du canal principal (1) le long de laquelle s'effectue ladite focalisation et la paroi opposée (6), pour dévier les particules du diamètre supérieur à un diamètre donné Dc, et **en ce qu'**il comporte une chambre de recirculation (40) débouchant dans ladite paroi opposée (6) du canal principal (1) au voisinage et en amont de la rangée (60) de piliers (50).

11. Procédé selon la revendication 10, **caractérisé en ce qu'**une dite rangée de piliers (60) est disposée en aval dudit ou de l'un au moins desdits dispositif(s) de focalisation et entre celui-ci et ladite chambre de recirculation (40).

12. Procédé selon la revendication 10, **caractérisé en ce que** la rangée de piliers (60) est disposée entre deux desdites chambres de recirculation (40).

13. Procédé selon une des revendications précédentes, **caractérisé en ce qu'**il comporte une région élargie du canal principal constituant ladite chambre de recirculation.

14. Procédé selon la revendication 13, **caractérisé en ce que** la région élargie du canal principal comporte au moins une paroi amont sensiblement perpendiculaire à l'axe de circulation du fluide dans le canal principal.

15. Procédé selon l'une des revendications précédentes, **caractérisé en ce que** ladite ou l'une au moins desdites chambre(s) de recirculation (40) présente une forme pseudo-rectangulaire, circulaire ou polygonale, cette chambre de recirculation (40) étant en communication avec le canal principal (1) par une ouverture.

16. Procédé selon la revendication 7, **caractérisé en ce que** le débit de fuite dans le canal de pompage de fuite (25) s'effectue de façon continue avec un débit ajustable, de manière à sélectionner la taille des particules.

17. Procédé selon une des revendications 16, **caractérisé en ce que** le débit dans le canal de pompage de fuite (25) est compris entre 0,1 $\mu$l/h et 500 $\mu$l/h.

## Patentansprüche

1. Verfahren zum Aussortieren submillimetrischer Partikel oder von Anhäufungen submillimetrischer Partikel, die in einem Fluid mitgerissen werden, das in einer axialen Richtung eines Hauptkanals fließt, wobei die Partikel eine andere Dichte als die des Fluids haben, wobei das Verfahren in einem ersten Bereich des Hauptkanals eine Fokussierung der Partikel entlang einer Wand (7) des Hauptkanals (1) durch mindestens eine Fokussiervorrichtung und hinter dem Bereich eine Sammlung von Partikeln in mindestens einer Sortier- und Entnahmevorrichtung durchführt, die mit dem Hauptkanal über eine Öffnung verbunden ist, so dass eine Auswahl der gesammelten Partikel von der Sortier- und Entnahmevorrichtung abhängig von der Größe der Partikel durchgeführt wird, und die oder mindestens eine der Sortier- und Entnahmevorrichtung(en) eine Umwälzkammer (40) ist, die mit dem Hauptkanal (1) in Verbindung steht und mindestens eine Umwälzzone (41) aufweist, um die gesammelten Partikel zu konzentrieren.

2. Verfahren nach Anspruch 1, **dadurch gekennzeichnet, dass** die Umwälzkammer (40) außerdem eine sequentielle Entnahmeeinrichtung (27) enthält.

3. Verfahren nach Anspruch 1 oder 2, **dadurch gekennzeichnet, dass** der erste Bereich einen im Wesentlichen konstanten Querschnitt hat, und dass die Fokussierung durch eine Injektion eines Fluids in den Hauptkanal ausgehend von der Fokussiervorrichtung durchgeführt wird, die mindestens einen Seitenkanal (3) mit einem Einfallwinkel $\alpha$ mindestens gleich 5° und vorzugsweise im Wesentlichen gleich 90° aufweist, um die Partikel auf die Wand (7) des Hauptkanals (1) hinter dem Bereich zu fokussieren, wo die seitliche Injektion durchgeführt wird.

4. Verfahren nach einem der vorhergehenden Ansprüche, **dadurch gekennzeichnet, dass** es entgegengesetzt zum Injektionsbereich und gegenüber und/oder hinter diesem eine Entnahme durch mindestens einen Entnahmekanal (21) durchführt.

5. Verfahren nach Anspruch 4, **dadurch gekennzeichnet, dass** die Abmessung des Entnahmekanals (21) oder der Entnahmekanäle kleiner als diejenige der feinsten im Hauptkanal fließenden Partikel ist.

6. Verfahren nach einem der vorhergehenden Ansprüche, **dadurch gekennzeichnet, dass** die mittlere Geschwindigkeit im Hauptkanal (1) zwischen 1 und 50 mm/s liegt, und dass die Geschwindigkeit in einer Umwälzzone (41) zwischen 5 und 1000 $\mu$m/s liegt.

7. Verfahren nach einem der vorhergehenden Ansprüche, **dadurch gekennzeichnet, dass** die oder mindestens eine der Umwälzkammer(n) (40) mit einem Leckpumpkanal (25) gekoppelt ist (sind).

8. Verfahren nach einem der vorhergehenden Ansprüche, **dadurch gekennzeichnet, dass** es eine Vielzahl der Sortier- und Entnahmevorrichtungen ($40_1$, $40_2$, $40_3$) in Kaskade aufweist, die so eingerichtet sind, dass sie Partikel zunehmender Größen aufnehmen.

9. Verfahren nach Anspruch 8, **dadurch gekennzeichnet, dass** mindestens eine zusätzliche Fokussiervorrichtung zwischen zwei der in Kaskade angeordneten Sortier- und Entnahmevorrichtungen angeordnet ist.

10. Verfahren nach einem der vorhergehenden Ansprüche, **dadurch gekennzeichnet, dass** es mindestens eine Reihe (60) von bezüglich der Achse des Hauptkanals (1) geneigten und sich zwischen der Wand (7) des Hauptkanals (1), entlang der die Fokussierung stattfindet, und der gegenüberliegenden Wand (6) erstreckenden geneigten Säulen aufweist, um die Partikel des Durchmessers größer als ein gegebener Durchmesser Dc umzuleiten, und dass es eine Umwälzkammer (40) aufweist, die in der gegenüberliegenden Wand (6) des Hauptkanals (1) in der Nähe von und vor der Reihe (60) von Säulen (50) mündet.

11. Verfahren nach Anspruch 10, **dadurch gekennzeichnet, dass** eine Reihe (60) von Säulen hinter der oder mindestens einer der Fokussiervorrichtung(en) und zwischen dieser und der Umwälzkammer (40) angeordnet ist.

12. Verfahren nach Anspruch 10, **dadurch gekennzeichnet, dass** die Reihe (60) von Säulen zwischen zwei der Umwälzkammern (40) angeordnet ist.

13. Verfahren nach einem der vorhergehenden Ansprüche, **dadurch gekennzeichnet, dass** es einen erweiterten Bereich des Hauptkanals aufweist, der die Umwälzkammer bildet.

14. Verfahren nach Anspruch 13, **dadurch gekennzeichnet, dass** der erweiterte Bereich des Hauptkanals mindestens eine vordere Wand aufweist, die zur Fließachse des Fluids im Hauptkanal im Wesentlichen lotrecht ist.

15. Verfahren nach einem der vorhergehenden Ansprüche, **dadurch gekennzeichnet, dass** die oder mindestens eine der Umwälzkammer(n) (40) eine pseudo-rechtwinklige, kreisförmige oder polygonale Form hat, wobei diese Umwälzkammer (40) über eine Öffnung mit dem Hauptkanal (1) in Verbindung steht.

16. Verfahren nach Anspruch 7, **dadurch gekennzeichnet, dass** der Leckdurchsatz im Leckpumpkanal (25) kontinuierlich mit einem einstellbaren Durchsatz erfolgt, um die Größe der Partikel auszuwählen.

17. Verfahren nach Anspruch 16, **dadurch gekennzeichnet, dass** der Durchsatz im Leckpumpkanal (25) zwischen 0,1 $\mu$l/h und 500 $\mu$l/h liegt.

**Claims**

1. A process for the sorting of submillimetre particles or a mass of submillimetre particles carried over in a fluid circulating in an axial direction in a main channel, the particles having a different density from that of the fluid, the process bringing about focusing of the particles along one wall (7) of the main channel (1) through at least one focusing device in a first region of the main channel downstream therefrom, a particle collector in at least one sorting and sampling device in communication with the main channel through an opening in such a way that the collected particles are selected through the sorting and sampling device according to the size of the particles, and that the at least one sorting and sampling device is a recirculation chamber (40) in communication with the main channel (1) and having at least one recirculation zone (41) to concentrate the collected particles.

2. A process according to claim 1, **characterised in that** the recirculation chamber (40) further comprises sequential sampling means (27).

3. A process according to claim 1 or 2, **characterised in that** the first region has a substantially constant cross-section and **in that** the focusing is brought about through injection of a fluid into the main channel from the focusing device which has at least one side channel (3) with an incidence $\alpha$ of at least 5° and preferably substantially equal to 90° to focus the particles on the wall (7) of the main channel (1) downstream from the region where the lateral injection is performed.

4. A process according to any one of the preceding claims, **characterised in that** opposite the injection region and facing it and/or downstream from it it effects sampling through at least one sampling channel (21).

5. A process according to claim 4, **characterised in that** the size of the sampling channel or channels (21) is smaller than that of the finest particles circulating in the main channel.

6. A process according to any one of the preceding claims, **characterised in that** the mean velocity in the main channel (1) is between 1 and 50 mm/s and that the velocity in the recirculation zone (41) is between 5 and 1000 $\mu$m/s.

7. A process according to any one of the preceding claims, **characterised in that** the at least one of the recirculation chambers (40) is connected to a leakage pumping channel (25).

8. A process according to any one of the preceding claims, **characterised in that** it has a plurality of the sorting and sampling devices in cascade ($40_1$, $40_2$, $40_3$) arranged in such a way as to collect particles of increasing size.

9. A process according to claim 8, **characterised in that** at least one additional focusing device is located between two of the sorting and sampling devices in cascade.

10. A process according to any one of the preceding claims, **characterised in that** it comprises at least one row (60) of pillars inclined with respect to the axis of the principal channel (1) and extending between the wall (7) of the main channel (1) along which the focusing occurs and the opposite wall (6) to deviate particles of diameter greater than a given diameter Dc, and **in that** it comprises a recirculation chamber (40) opening in the opposing wall (6) of the main channel (1) in the vicinity of and upstream from the row (60) of pillars (50).

11. A process according to claim 10, **characterised in that** the row of pillars (60) is located downstream from the at least one of the focusing devices and between the latter and the recirculation chamber (40).

12. A process according to claim 10, **characterised in that** the row of pillars (60) is located between two of the recirculation chambers (40).

13. A process according to any one of the preceding claims, **characterised in that** it comprises an enlarged region of the principal channel forming the recirculation chamber.

14. A process according to claim 13, **characterised in that** the enlarged region of the main channel comprises at least one upstream wall which is substantially perpendicular to the axis of circulation of fluid in the main channel.

15. A process according to any one of the preceding claims, **characterised in that** the at least one of the recirculation chambers (40) is of pseudo-rectangular, circular or polygonal shape, this recirculation chamber (40) being in communication with the main channel (1) through an opening.

16. A process according to claim 7, **characterised in that** the leakage flow in the leakage pumping channel (25) is continuous with a flow adjustable in such a way that the particle size can be selected.

17. A process according to claim 16, **characterised in that** the flow in the leakage pumping channel (25) is between 0.1 $\mu$l/h and 500 $\mu$l/h.

FIG.1

$V_{prélèvement}=1mm/s$

$V_0=1mm/s$

$V_{injection}=5mm/s$

FIG.2a

FIG.2b

FIG.3a

FIG.3b

FIG.3c

Centre de la recirculation

FIG.4a

Centre de la recirculation

FIG.4b

FIG.4c

FIG.4d

FIG.4e

25 ou 27

FIG.4f

FIG.4g

FIG.5

FIG.6

FIG.7a

FIG.7b

FIG.8

Q Prélèvement

$P_{Sortie}$

FIG.9

V prélèvement =30 μm/s,
Q prélèvement =1,8 μl/min

75μm

50μm

46

100μm

45

28

7

P sortie=0

150μm

48    47

V₀=1mm/s,
Soit Q₀=60μl/min

w₀

FIG.10

V prélèvement =63 μm/s,
Q prélèvement =3,8 μl/min

100μm

50μm

46'

45'

28

150μm

7

P sortie=0

200μm

47'    48'

V₀=1mm/s,
Soit Q₀=60μl/min

FIG.11

41

27

40

40

45

sortie à pression atmosphérique

V fuite =450 μm/s,
Q fuite =160 μl/h

25

7

48

$V_0$=1mm/s,
Soit $Q_0$=60μl/min

3

F"

**FIG.12**

V focalisation =1mm/s
Q focalisation =30μl/min

51

D < Dc

F

D

L

φ

β

50

e

50

**FIG.13**

FIG.14

FIG.15

$$(L+\phi)^2=(e+\phi)^2+Dc^2/4$$
$$L\approx\alpha Dc \; ; \; \alpha\approx 1{,}25\text{-}1{,}50$$

$$e=\phi+\sqrt{(\alpha Dc+\phi)^2-Dc^2/4}$$

FIG.16

Vitesse 1mm/s,
soit un débit de
60µl/min

$P_{sortie}=0$

FIG.17

a = 1mm

b = 300µm

c = 1.1mm

d = 2mm

3.5mm

a

b

d

a

b

c

1.3mm

Profondeur : 1mm

**FIGURE 18A**

**FIGURE 18B**

Pilier de diamètre : 150µm

300µm

440µm

**FIGURE 19**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004037374 A, HUANG
- US 2007026381 A, HUANG
- US 2007059781 A, KAPUR
- US 2007221550 A
- WO 2006102258 A, Barton SMITH et Zachary HU-MES

**Littérature non-brevet citée dans la description**

- **MASUMI YAMADA.** Pinched Flow Fractionation : Continuous Size Separation of Particules Utilizing a Laminar Flow Profile in a Pinched Microchannel. *Analytical Chemistry,* 15 Septembre 2004, vol. 78 (18), 5465-5471
- Hydrodynamic filtration for on-chip particle concentration and classification utilizing microfluidics. **MASUMI YAMADA ; MINORI SEKI.** Lab Chip 2005. The Royal Society of Chemistry, vol. 5, 1233-1239
- **D. LIM.** Dynamic formation of ring-shape patterns of colloïdal particles in microfluidic systems. *Applied Physics Letters,* 2003, vol. 83 (6), 1145-1147
- *Nature,* 2003, vol. 425, 38
- **HUANG.** Continuous particles séparation through deterministic lateral displacement. *Science,* 2004, vol. 304, 987-990
- **M. YAMADA ; M. SEKI.** *Lab Chip,* 2005, 1233-1235